# EUROPÄISCHE PATENTSCHRIFT

(11) **EP 1 735 385 B1**
(45) Veröffentlichungstag und Bekanntmachung des Hinweises auf die Patenterteilung: **08.08.2007**
(21) Anmeldenummer: 05716276.0
(22) Anmeldetag: 22.03.2005
(51) Int. Cl.: C09B 57/04, C09D 11/00, D06P 5/30

(54) **HOCHLICHTECHTE TINTEN FÜR DEN DIGITALEN TEXTILDRUCK**
HIGHLY FADEPROOF INKS USED FOR DIGITAL TEXTILE PRINTING
ENCRES TRES RESISTANTES A LA LUMIERE DESTINEES A L'IMPRESSION TEXTILE NUMERIQUE

(30) Priorität: 02.04.2004 DE 102004016287
(43) Veröffentlichungstag der Anmeldung: 27.12.2006
(73) Patentinhaber: DyStar Textilfarben GmbH & Co. Deutschland KG, 65926 Frankfurt am Main (DE)
(72) Erfinder: ARNOLD, Markus, 65451 Kelsterbach (DE); MUTH, Mathias, 65197 Wiesbaden (DE)
(86) Internationale Anmeldenummer: PCT/EP2005/003016
(87) Internationale Veröffentlichungsnummer: WO 2005/097913

(56) Entgegenhaltungen:
- US-A- 5 716 446

## Beschreibung

Digitale Drucktechniken werden in Zukunft sowohl im textilen, als auch im nichttextilen Bereich eine immer größere Bedeutung erlangen.

Die veränderten Marktanforderungen im konventionellen Textildruck erfordern mehr Flexibilität in Design, Farbe und Lieferzeit. Dieser Entwicklung kommt die digitale Ink-Jet-Technologie entgegen. Mit den Möglichkeiten der neuen Technologie, direkt vom Computer über die Druckdüsen auf die Textilien zu drucken, ohne die Notwendigkeit Druckschablonen herzustellen, erhöht sich die Flexibilität, Effizienz und Umweltverträglichkeit der Druckverfahren. Sie erlaubt weitgehend integrierte Verfahrensschritte, verkürzt die Druckzeiten und erfüllt die Forderung nach rascher Reaktion auf Marktentwicklungen sowie weniger Zwischenstufen im Fertigungsprozess.

Beim Ink-Jet Verfahren (Tintenstrahldruck-Verfahren) verwendet man üblicherweise wässrige Tinten, die in kleinen Tröpfchen direkt auf das Substrat gespritzt werden. Man unterscheidet dabei ein kontinuierliches Verfahren (Continuous flow), bei dem ununterbrochen Tintentröpfchen generiert und durch ein elektrisches Feld, abhängig vom zu druckenden Muster, auf das Substrat gelenkt werden und ein unterbrochenes Tintenstrahl- oder "Drop-on-Demand"-Verfahren, bei dem der Tintenausstoß nur dort erfolgt, wo ein farbiger Punkt gesetzt werden soll. Bei dem letztgenannten Verfahren wird entweder über einen piezoelektrischen Kristall oder ein Heizelement (Bubble- oder Thermo-Jet-Verfahren) Druck auf das Tintensystem ausgeübt und so ein Tintentropfen herausgeschleudert. Solche Verfahrensweisen sind in Text. Chem. Color, Band 19 (8), Seiten 23 ff und Band 21 Seiten 27 ff beschrieben. Weitere "Drop-on-Demand"-Verfahren sind das "Flatjet-Verfahren" , welches z.B. in WO 99/46126 beschrieben ist, bei dem durch piezoelektrisch gesteuerte Vibration einer mit Farbstoff gefüllten Nadel Tintentröpfchen auf das Substrat geschleudert werden bzw. das "Valvejet-Verfahren", bei dem der Tintenstrahl und damit die Pixelverteilung über ein Ventil geregelt wird, ein solches Verfahren ist z.B. in US 4555719 beschrieben.

Für diese hochsensible Mikrotechnologie müssen maßgeschneiderte Farbstoffzubereitungen (Tinten) entwickelt werden, die beispielsweise die hohen Anforderungen bezüglich der Reinheit, der Teilchengröße, der Viskosität, der Oberflächenspannung, der Leitfähigkeit, der physikalisch-chemischen Stabilität, der thermophysikalischen Eigenschaften, dem pH-Wert, der Schaum- und Mikroschaumfreiheit, der Farbstärke, dem Echtheitsniveau und der Lagerstabilität erfüllen. Handelsübliche Textilfarbstoffe in Form ihrer Pulver-, Granulat- oder Flüssigeinstellungen, wie sie für den konventionellen analogen Textildruck eingesetzt werden, enthalten signifikante Elektrolytmengen, Entstaubungsmittel und Stellmittel, die beim Ink-Jet- Druck zu massiven Problemen führen. Weiterhin ergeben Farbstofftinten, wie sie für nicht textile Materialien, wie zum Beispiel Papier, Holz, Kunststoffe, Keramik usw. eingesetzt werden nur unbefriedigende Ergebnisse hinsichtlich der Applizierbarkeit, sowie Farbausbeute und der Echtheiten der Drucke auf textilem Material.

Ink-Jet Tinten auf Basis von Dispersionsfarbstoffen haben einige anwendungstechnische Mängel bezüglich der Dispersionsstabilität der Tinten und der beim Druck erzielten Echtheiten, vor allem hinsichtlich der Lichtechtheit der resultierenden Drucke.

Aufgabe der vorliegenden Erfindung war es deshalb, Drucktinten zur Verfügung zu stellen, die die oben genannten Nachteile nicht aufweisen.

Es wurde nun überraschenderweise gefunden, dass Tinten auf der Basis von lsoindoleninfarbstoffen, wie sie aus EP 684 289 bekannt sind, hervorragende Ergebnisse liefern.

Die vorliegende Erfindung betrifft somit neue wässrige Drucktinten für den Textildruck nach dem Ink-Jet Verfahren, die einen Isoindoleninfarbstoff der allgemeinen Formel (I) enthalten, 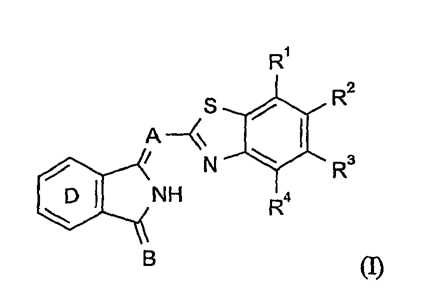 worin
- A: für N oder einen Cyanmethylenrest,
- B: für einen Rest der Formel C(CN)COOR⁵ oder N-R⁶ steht,
- R¹ bis R⁴: unabhängig voneinander Wasserstoff, Halogen, gegebenenfalls substituiertes C₁-C₈-Alkyl oder C₅-C₆-Cycloalkyl, gegebenenfalls durch Sauerstoff unterbrochenes C₁-C₁₀-Alkoxy, gegebenenfalls substituiertes C₆-C₁₀-Aryloxy, CF₃, oder gegebenenfalls substituiertes Dialkylamin bedeuten oder jeweils zwei benachbarte R¹ bis R⁴-Reste zusammen mit den aromatischen Ring C-Atomen einen annelierten Benzol- oder Naphthalinring bilden, der gegebenenfalls weiter substituiert sein kann, wobei als Substituenten beispielsweise Halogen oder C₁-C₄-Alkyl genannt werden können,
- R⁵: für einen gegebenenfalls substituierten und gegebenenfalls durch Sauerstoff unterbrochenen, gesättigten oder ungesättigten C₁-C₂₀-Alkylrest, C₆-C₁₀-Aryl-C₁-C₁₀-Alkyl- oder Hetarylalkyl steht,
- R⁶: gegebenenfalls substituiertes und gegebenenfalls durch Sauerstoff unterbrochenes C₁-C₂₀-Alkyl, Cycloalkyl, Cycloalkyl-alkyl, oder Aralkyl bedeutet und
der Ring D unsubstituiert ist oder wenigstens einen Substituenten trägt, welcher gegebenenfalls, zusammen mit einem weiteren Substituenten in o-Stellung und den Ring-C-Atomen, einen annelierten Benzol oder Naphthalinring bildet.

Geeignete Reste R¹ bis R⁴ sind z.B. Wasserstoff, Chlor, Brom, Methyl, Ethyl, iso-Propyl, tert.-Butyl, Methoxy, Ethoxy, n-Propoxy, n-Butoxy, Methoxy-ethyl, Methoxy-ethoxy-ethyl, Ethoxy-ethyl, Ethoxy-ethoxy-ethyl, Butoxy-ethyl, Phenoxy, 2-Methyl-phenoxy, 3-Methyl-phenoxy, 4-Methyl-phenoxy, Dimethylamino, Diethylamino, Bis-(2-cyan-ethyl)-amino.

Geeignete Reste R⁵ sind z.B.: Methyl, Ethyl, n-Propyl, iso-Propyl, Allyl, n-Butyl, n-Pentyl, n-Hexyl, n-Heptyl, n-Octyl, n-Decyl, 2-Methoxy-ethyl, 2-Ethoxy-ethyl, 2-Isopropoxy-ethyl, 2-Butoxy-ethyl, 2-Allyloxy-ethyl, 2-(2-Methoxy-ethoxy)-ethyl, 2-(2-Ethoxy-ethoxy)-ethyl, 2-(2-Methoxy-ethoxy)-ethyl, 2-Cyan-ethyl, 2-(Cyan-ethoxy)-ethyl, 4-(2-Cyan-ethoxy)-butyl, 2-Ethyl-hexyl, Benzyl, Phenylethyl. 3-Phenyl-propyl, Phenoxy-ethyl, Furfuryl. Als verzweigte Reste R⁵ kommen vorzugsweise solche mit einer Methylseitenkette in Frage wie z.B.: iso-Butyl, tert.-Butyl, iso-Pentyl, 1-Methoxy-2-propanol, 1-Ethoxy-2-propanol.

Geeignete Reste R⁶ sind z.B.: Methyl, Ethyl, n-Propyl, iso-Propyl, Allyl, n-Butyl, n-Pentyl, n-Hexyl, n-Heptyl, n-Octyl, n-Decyl, 2-Ethyl-hexyl, 2-Methoxy-ethyl, 2-Ethoxy-ethyl, 3-Methoxy-propyl, 3-Ethoxy-propyl, 3-Butoxy-propyl, 3-Phenoxy-propyl, 3-(2-Phenoxy-ethoxy)-propyl, Cyclohexyl, Cyclohexylmethyl, Benzyl, 2-Phenyl-ethyl.

Bevorzugt sind Farbstoffe der Formel (1), worin R¹ und R² unabhängig voneinander Wasserstoff, Cl, Br, Methyl, Ethyl, n-Propyl, Isopropyl, n-Butyl, iso-Butyl, tert.-Butyl, Cyclohexyl, gegebenenfalls durch 1 bis 2 Sauerstoffe unterbrochenes C₁-C₁₀-Alkoxy, gegebenenfalls substituiertes Phenoxy, CF₃ oder eine Di(C₁-C₄)-Alkylaminogruppe bedeuten, R³ und R⁴ die Bedeutung von R¹ und R² haben oder zusammen mit den Ring-C-Atomen einen annelierten Benzolring bilden, R⁵ ein gegebenenfalls durch Cl, CN oder gegebenenfalls substituiertes Phenoxy, substituiertes und gegebenenfalls durch 1 bis 2 Sauerstoffatome unterbrochenes C₁-C₁₂-Alkyl, C₆-C₁₀-Aryl-C₁-C₁₀-Alkyl oder Hetarylalkyl ist, R⁶ ein gegebenenfalls durch gegebenenfalls substituiertes Phenoxy, substituiertes gesättigtes oder ungesättigtes C₁-C₁₂-Alkyl bedeutet, das gegebenenfalls durch 1 bis 2 Sauerstoffe unterbrochen ist, und der Ring D unsubstituiert oder durch CN, Halogenatome, insbesondere 1 bis 4 Cl-Atome, 1 bis 2 C₁-C₁₀-Alkylreste und/oder 1 bis 2 C₁-C₁₀-Alkoxyreste oder einen gegebenenfalls substituierten Phenylrest, substituiert ist. Insbesondere ist der Ring D jedoch unsubstituiert.

Besonders bevorzugte Farbstoffe der allgemeinen Formel (I) sind solche der allgemeinen Formel (II) 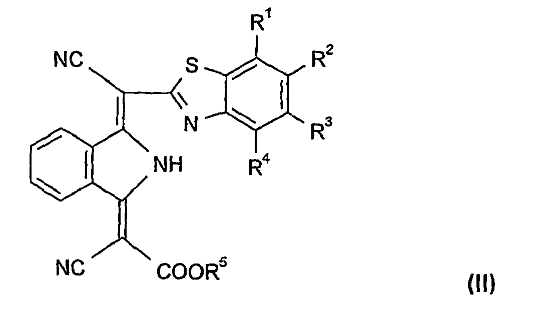 worin R¹ bis R⁵ die obige Bedeutung haben, vorzugsweise stehen
R¹ bis R⁴ unabhängig voneinander für Wasserstoff, Chlor, Methyl, Ethyl, iso-Propyl, tert.-Butyl, Cyclohexyl, Methoxy, Ethoxy, n-Propoxy, n-Butoxy, Methoxy-ethyl, Ethoxy-ethyl, Butoxy-ethyl oder Phenoxy und
R⁵ für n-Butyl, iso-Butyl, n- und iso-Pentyl, Hexyl, Octyl, 2-Ethyl-hexyl, Methoxy-ethyl, Ethoxy-ethyl, Butoxy-ethyl, Butoxy-ethoxy-ethyl.

Weiterhin bevorzugt sind Farbstoffe der allgemeinen Formel (I), die der allgemeinen Formel (III) entsprechen 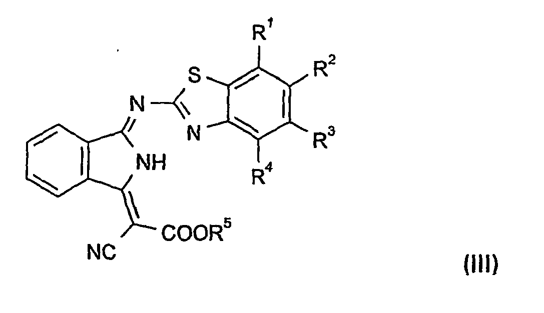 worin R¹ bis R⁵ die oben angegebene Bedeutung besitzt, vorzugsweise steht
R¹ bis R⁴ unabhängig voneinander für Wasserstoff, Chlor, Methyl, Ethyl, iso-Propyl, tert.-Butyl, Cyclohexyl, Methoxy, Ethoxy, n-Propoxy, n-Butoxy, Methoxy-ethyl, Ethoxy-ethyl, Butoxy-ethyl oder Phenoxy und
R⁵ für Methyl, Ethyl, Propyl, iso-Propyl, Allyl, n-Butyl, iso-Butyl, n- und iso-Pentyl, Hexyl, Octyl, 2-Ethyl-hexyl, Methoxy-ethyl, Ethoxy-ethyl, Butoxy-ethyl, Butoxy-ethoxy-ethyl.

Ebenfalls bevorzugt sind Farbstoffe der allgemeinene Formel (I), die der allgemeinen Formel (IV) entsprechen 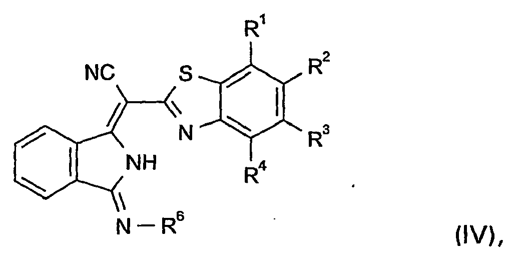 worin R¹ bis R⁴ und R⁶ die oben angegebene Bedeutung haben, vorzugsweise steht
R¹ bis R⁴ unabhängig voneinander für Wasserstoff, Chlor, Methyl, iso-Propyl, tert.-Butyl, Cyclohexyl, Methoxy, Ethoxy, n-Propoxy, n-Butoxy, Methoxy-ethyl, Ethoxy-ethyl, Butoxy-ethyl oder Phenoxy und
R⁶ für Methyl, Ethyl, Propyl, iso-Propyl, Allyl, n-Butyl, iso-Butyl, n- und iso-Pentyl, Hexyl, Octyl, 2-Ethyl-hexyl, Cyclohexyl, Methoxy-propyl, Ethoxy-propyl, 2-Phenoxy-ethyl, 3-Phenoxypropyl, 2-Phenoxy-ethoxy-propyl, Phenylethyl.

Darüber hinaus sind Farbstoffe der allgemeinen Formel (I) bevorzugt, die der allgemeinen Formel (V) entsprechen, 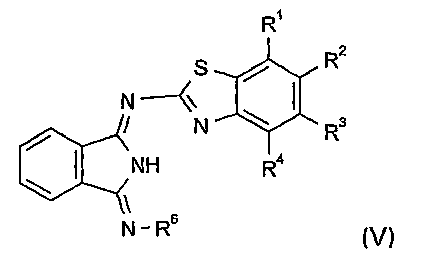 worin
R¹ bis R⁴ und R⁶ die oben angegebene Bedeutung haben, vorzugsweise stehen R¹ bis R⁴ unabhängig voneinander für Wasserstoff, Chlor, Methyl, iso-Propyl, tert.-Butyl, Cyclohexyl, Methoxy, Ethoxy, n-Propoxy, n-Butoxy, Methoxy-ethyl, Ethoxy-ethyl, Butoxy-ethyl oder Phenoxy und
R⁶ für Methyl, Ethyl, Propyl, iso-Propyl, Allyl, n-Butyl, iso-Butyl, n- und iso-Pentyl, Hexyl, Octyl, 2-Ethyl-hexyl, Cyclohexyl, Methoxy-propyl, Ethoxy-propyl, 2-Phenoxy-ethyl, 3-Phenoxypropyl, 2-Phenoxy-ethoxy-propyl, Phenylethyl.

Neben dem Farbstoff enthalten die Drucktinten 0.1 bis 20% Dispergiermittel. Als Dispergiermittel eignen sich beispielsweise sulfonierte bzw. sulfomethylierte Lignine, Formaldehydkondensate von aromatischen Sulfonsäuren, Formaldehydkondensate von gegebenenfalls substituierten Phenolderivaten, Polyacrylate und deren Copolymere, styroloxidhaltige Polyether, modifizierte Polyurethane, Umsetzungsprodukte von Alkylenoxiden mit alkylierbaren Verbindungen wie z.B. Fettalkoholen, Fettaminen, Fettsäuren, Carbonsäureamiden, Harzsäuren sowie ggf. substituierten Phenolen.

Für den Einsatz der Tinten im Continuous flow Verfahren kann durch Elektrolytzusatz eine Leitfähigkeit von 0,5 bis 25 mS/cm eingestellt werden. Als Elektrolyt eignen sich beispielsweise: Lithiumnitrat oder Kaliumnitrat.

Die erfindungsgemäßen Farbstofftinten können organische Lösungsmittel mit einem Gesamtgehalt von 1-60%, bevorzugt von 5-40 Gew.-% enthalten. Geeignete organische Lösungsmittel sind beispielsweise Alkohole, z. B. Methanol, Ethanol, 1-Propanol, 2-Propanol, 1-Butanol, tert. Butanol, 1-Pentanol, Benzylalkohol, 2-Butoxyethanol, 2-(2-Methoxyethoxy)ethanol, 2-(2-Ethoxyethoxy)ethanol, 2-(2-Butoxyethoxy)ethanol, 2- (2-Propoxyethoxy)ethanol;
mehrwertige Alkohole z. B.: 1,2-Ethandiol, 1,2,3-Propantriol, 1,2-Butandiol, 1,3-Butandiol, 1,4-Butandiol, 1,2-Propandiol, 1,3-Propandiol, 1,2-Pentandiol, 1,3-Pentandiol, 1,4-Pentandiol, 1,5-Pentandiol, 1,2-Hexandiol, 1,6-Hexandiol, 1,2,6-Hexantriol, 1,2- Octandiol, Trimethylolethan, Trimethylolpropan;
Polyalkylenglykole, z. B.: Polyethylenglykol und Polypropylenglykol sowie deren Copolymere, Alkylenglykole mit 2 bis 8 Alkylengruppen sowie entsprechende Thioetherverbindungen, z. B.: Monoethylenglykol, Diethylenglykol, Triethylenglykol, Tetraethylenglykol, Thioglykol, Thiodiglykol, Butyldiglykol, Butyltriglykol, Hexylenglykol, Propylenglykol, Dipropylenglykol, Tripropylenglykol,;
niedrige Alkylether mehrwertiger Alkohole, z. B.: Ethylenglykolmonomethylether, Ethylenglykol-monoethylether, Ethylenglykol-monobutylether, Diethylenglykol-monomethylether, Diethylenglykol-monoethylether, Diethylenglykol-monobutylether, Diethylenglykol-monohexylether, Triethylenglykol-monomethylether, Triethylenglykol-monobutylether, Tripropylenglykol-monomethylether, Tetraethylenglykol-monomethylether, Tetraethylenglykol-monobutylether, Tetraethylenglykol-dimethylether, Propylenglykol-monomethylether, Propylenglykol-monoethylether, Propylenglykof-monobutylether, Tripropylenglykol-isopropylether, Polyalkylenglykolether, wie z. B.: Polyethylenglykol-monomethylether, Polypropylenglykol-glycerolether, Polyethylenglyko-ltridecylether, Polyethylenglykol-nonylphenylether;
Amine, wie z. B.: Methylamin, Ethylamin, Triethylamin, Diethylamin, Dimethylamin, Trimethylamin, Dibutylamin, Diethanolamin, Triethanolamin, N-Acetylethanolamin, N-Formylethanolamin, Ethylendiamin,
Harnstoffderivate, wie z. B.: Harnstoff, Thioharnstoff, N-Methylharnstoff, N,N'-epsilon Dimethylharnstoff, Ethylenharnstoff, 1,1,3,3-Tetramethylharnstoff;
Amide, wie z. B.: Dimethylformamid, Dimethylacetamid, Acetamid;
Ketone oder Ketoalkohole, wie z. B.: Aceton, Diacetonalkohol;
cyclische Ether, wie z. B.; Tetrahydrofuran, gamma-Butyrolacton, epsilon-Caprolactam;
ferner Sulfolan, Dimethylsulfolan, Methylsulfolan, 2,4-Dimethylsulfolan, Dimethylsulfon, Butadiensulfon, Dimethylsulfoxid, Dibutylsulfoxid, N-Cyclohexyl-Pyrrolidon, N-Methyl-2-Pyrrolidon, N-Ethyl-Pyrrolidon, 2-Pyrrolidon, 1-(2-Hydroxyethyl)-2- Pyrrolidon, 1-(3-Hydroxypropyl)-2-Pyrrolidon, 1,3-Dimethyl-2-imidazolidinon, 1,3- Dimethyl-2-imidazolinon, 1,3-Bismethoxymethylimidazolidin, Pyridin, Piperidin, Butyrolaceton, Ethylendiamintetraacetat.

Weiterhin können die erfindungsgemäßen Drucktinten die üblichen Zusatzstoffe enthalten, wie beispielsweise Viskositätsmoderatoren um Viskositäten im Bereich von 1 bis 40,0 mPa·s in einem Temperaturbereich von 20 bis 50 °C einzustellen. Bevorzugte Tinten haben eine Viskosität von 1 bis 20 mPa·s und besonders bevorzugte Tinten haben eine Viskosität von 1 bis 15 mPa·s.

Als Viskositätsmoderatoren eignen sich rheologische Additive, beispielsweise: Polyvinylcaprolactam oder Polyvinylpyrrolidon sowie deren Copolymere, Polyetherpolyol, Assoziativverdicker, Polyharnstoff, Polyurethan, Natriumalginate, modifizierte Galaktomannane, Polyetherharnstoff, Polyurethan, nichtionogene Celluloseether.

Als weitere Zusätze können die erfindungsgemäßen Tinten oberflächenaktive Substanzen zur Einstellung von Oberflächenspannungen von 20 bis 65 mN/m enthalten, die in Abhängigkeit von dem verwendeten Verfahren (Thermo- oder Piezotechnologie) gegebenenfalls angepasst werden.

Als oberflächenaktive Substanzen eignen sich beispielsweise: ionogene und nichtionogene Tenside.

Zusätzlich können die Tinten zur Verbesserung der Lichtechtheit UVabsorbierende Substanzen enthalten. Geeignet sind beispielsweise ggf. substituierte Benzophenone, ggf. substituierte Benztriazole, ggf. substituierte Benztriazine sowie UV-Stabilisatoren auf der Basis sterisch gehinderter Amine (HALS-Typ).

Weiterhin können die Tinten noch übliche Zusätze, wie beispielsweise Stoffe zur Hemmung des Pilz- und Bakterienwachstums und/oder Entschäumer wie z.B. Polyethersiloxan-Copolymere oder organisch modifizierte Polysiloxane enthalten.

Die Tinten können in üblicher Weise durch Zerkleinern der entsprechenden Farbstoffes in Gegenwart eines oder mehrerer Dispergiermittel sowie Wasser in einem Mahlaggregat hergestellt werden. Die anderen Tintenbestandteile können sowohl vor, während oder nach dem Mahlprozess zugegeben werden. Als Mahlaggregate eignen sich besonders Rührwerkskugelmühlen, in denen Perlen mit einem Durchmesser von 0,05 mm bis 2,0 mm, bevorzugt kleiner als 1,0 mm eingesetzt werden. Bevorzugt wird für den Mahlprozess ein konzentrierterer Tintenteig hergestellt, der nach dem Mahlvorgang weiter auf die Endzusammensetzung verdünnt wird. Die so erhaltene Tinte kann entweder direkt eingesetzt, einer weiteren Reinigung (z.B. Filtration) unterworfen werden oder der Mahlvorgang durch Weiterbehandlung im Mahlaggregat fortgeführt werden.

Die erfindungsgemäßen Farbstofftinten eignen sich für den Einsatz in Tintenstrahl- Druckverfahren zum Bedrucken der verschiedensten unbehandelten oder auch vorpräparierten Polyester-, Polyamid-, Acetat, Triacetat- oder Polyurethanmaterialien, insbesondere von Polyester-Materialien. Die erfindungsgemäßen Drucktinten sind auch zum Bedrucken der eben erwähnten Fasern in Mischgewebe geeignet., z. B. von Gemischen aus Baumwolle und Polyester.

Die Vorbehandlung des textilen Substrates erfolgt vor dem Bedrucken mit Verdickungsmittel, die das Fliessen der Motive beim Aufbringen der Druckfarbe verhindern, dies sind beispielsweise Natriumalginate, modifizierte Polyacrylate oder hochveretherte Galaktomannane, und/oder Substanzen, die die Fixierausbeute erhöhen.

Diese Reagenzien zur Vorpräparierung werden mit geeigneten Auftragsgeräten, beispielsweise mit einem 2- oder 3-Walzenfoulard, mit berührungslosen Sprühtechnologien, mittels Schaumauftrag oder mit entsprechend angepassten Ink- Jet Technologien in definierter Menge gleichmäßig auf das textile Substrat aufgebracht und anschließend getrocknet.

Nach dem Bedrucken kann das textile Fasermaterial bei 80 bis 150 °C getrockret und/oder anschließend fixiert werden. Die Fixierung der mit Dispersionsfarbstoffen hergestellten Ink-Jet-Drucke erfolgt bei erhöhter
Temperatur, mit Sattdampf, mit überhitztem Dampf, mit Heißluft, mit Druckdampf, mit Mikrowellen, mit Infrarotstrahlung, mit Laser- oder Elektronenstrahlen oder mit anderen geeigneten Energieübertragungsarten.

Im Anschluss an die Fixierung kann eine Drucknachbehandlung durchgeführt werden, die zu einer Verbesserung der Echtheiten sowie einem einwandfreien Weißfond führt.

Die mit den erfindungsgemäßen Farbstofftinten hergestellten Drucke besitzen, insbesondere auf synthetischen Fasermaterialien, eine hohe Farbstärke, eine gute Licht- und Heißlichtechtheit, sehr gute Nassechtheitseigenschaften wie Wasch-, Wasser-, Seewasser-, Wetter- und Schweißechtheiten, sowie eine gute Trockenfixierechtheit, Bügelechtheit und Reibechtheit.

Die nachfolgenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter.

### Allgemeine Vorgehensweise:

Herstellung eines Tintenteiges (enthält 25% Farbstoff): Zu 125 g Farbstoff werden zusammen mit X Gewichtsäquivalenten (1 Gewichtsäquivalent entspricht 125 g) Dispergiermittel/Dispergiermittelmischung und 375-125X g demineralisiertem Wasser vermengt und in einer Rührwerkskugelmühle gemahlen, so dass die mittlere Partikelgröße < 250 nm und die maximale Partikelgröße kleiner als 1 µm wird. Bei der Mahlung des Tintenteiges können bereits weitere Additive wie Biozide, Entschäumer,... sowie Teile der eingesetzten organischen Lösungsmittel zugesetzt werden.

Zum so hergestellten Tintenteig (enthaltend 25% Farbstoff) werden die sonstigen Tintenbestandteile (Organische Lösungsmittel, sonstige Additive, Wasser) gegeben und durch Anschlagen im Dissolver gründlich vermengt. Nach Filtration durch einen handelsüblichen Papierfilter (Macherey-Nagel MN-614) sind die Tinten einsatzbereit.

### Beispiel 1

Ein textiles Flächengebilde, bestehend aus Polyester wird mit einer Flotte bestehend aus 50g/l einer 8%igen Natriumalginatlösung, 100 g/l einer 8-12%igen Kernmehretherlösung und 5g/l Mononatriumphosphat in Wasser foulardiert und dann getrocknet. Die Flottenaufnahme beträgt 70%. Auf das so vorbehandelte Textil wird eine nach oben beschriebener Vorgehensweise hergestellte wässrige Tinte, enthaltend
3,5% des Farbstoffes (1) 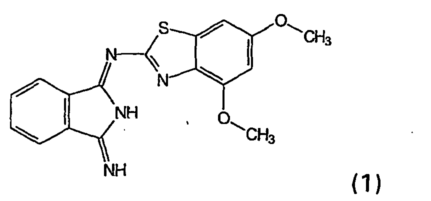 2,5% Dispergiermittel Disperbyk 190
30% 1,5-Pentandiol
5% Diethylenglykolmonomethylether
0,01 % Biozid Mergal K9N
58,99% Wasser
mit einem Drop-on-Demand (Piezo) Inkjet Druckkopf aufgedruckt. Der Druck wird vollständig getrocknet. Die Fixierung erfolgt mittels überhitztem Dampf bei 175 °C während 7 Minuten.Anschließend wird der Druck einer alkalisch reduktiven Nachbehandlung unterzogen, warm gespült und dann getrocknet.

### Beispiel 2

Ein textiles Flächengebilde, bestehend aus Polyester wird mit einer Flotte bestehend aus 50g/l einer 8%igen Natriumalginatlösung, 100 g/l einer 8-12%igen Kernmehretherlösung und 5g/l Mononatriumphosphat in Wasser foulardiert und dann getrocknet. Die Flottenaufnahme beträgt 70%. Auf das so vorbehandelte Textil wird eine nach oben beschriebener Vorgehensweise hergestellte wässrige Tinte, enthaltend
2% des Farbstoffes (2) 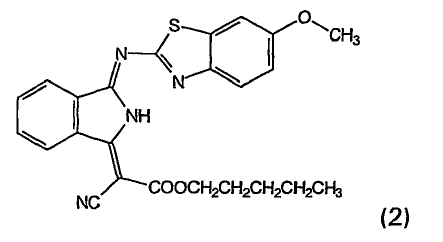 1 % Dispergiermittel Tego Dispers 740 W
20% Glycerin
0,01 % Biozid Mergal K9N
76,99% Wasser
mit einem Drop-on-Demand (Bubble-Jet) Inkjet Druckkopf aufgedruckt. Der Druck wird vollständig getrocknet. Die Fixierung erfolgt mittels überhitztem Dampf bei 175 °C während 7 Minuten. Anschließend wird der Druck einer alkalisch reduktiven Nachbehandlung unterzogen, warm gespült und dann getrocknet.
Man erhält einen hochbrillanten, gelborangen Druck mit hervorragenden Gebrauchs- und Heißlichtechtheiten.

### Beispiel 3

Ein textiles Flächengebilde, bestehend aus Polyester wird mit einer Flotte bestehend aus 50g/l einer 8%igen Natriumalginatlösung, 100 g/l einer 8-12%igen Kernmehretherlösung und 5g/l Mononatriumphosphat in Wasser foulardiert und dann getrocknet. Die Flottenaufnahme beträgt 70%.
Auf das so vorbehandelte Textil wird eine nach oben beschriebener Vorgehensweise hergestellte wässrige Tinte, enthaltend
7% des Farbstoffes (2)
3% Dispergiermittel Tamol
30% Diethylenglykol
0,01 % Biozid Mergal K9N
59,99% Wasser
mit einem Drop-on-Demand (Piezo) Inkjet Druckkopf aufgedruckt. Der Druck wird vollständig getrocknet. Die Fixierung erfolgt mittels überhitztem Dampf bei 175°C während 7 Minuten. Anschließend wird der Druck einer alkalisch reduktiven Nachbehandlung unterzogen, warm gespült und dann getrocknet. Man erhält einen hochbrillanten, gelborangen Druck mit hervorragenden Gebrauchs- und Heißlichtechtheiten.

### Beispiel 4

Ein textiles Flächengebilde, bestehend aus Polyester wird mit einer Flotte bestehend aus 50g/l einer 8%igen Natriumalginatlösung, 100 g/l einer 8-12%igen Kernmehretherlösung und 5g/l Mononatriumphosphat in Wasser foulardiert und dann getrocknet. Die Flottenaufnahme beträgt 70%.
Auf das so vorbehandelte Textil wird eine nach oben beschriebener Vorgehensweise hergestellte wässrige Tinte, enthaltend
1 % des Farbstoffes (2)
0,6% Dispergiermittel Tego Dispers 760 W
15% Polyethylenglykol 400
0,01 % Biozid Mergal K9N
83,39% Wasser
mit einem Drop-on-Demand (Bubble-Jet) Inkjet Druckkopf aufgedruckt. Der Druck wird vollständig getrocknet. Die Fixierung erfolgt mittels überhitztem Dampf bei 175 °C während 7 Minuten. Anschließend wird der Druck einer alkalisch reduktiven Nachbehandlung unterzogen, warm gespült und dann getrocknet.
Man erhält einen hochbrillanten, gelborangen Druck mit hervorragenden Gebrauchs- und Heißlichtechtheiten.

### Beispiel 5

Ein textiles Flächengebilde, bestehend aus Polyester wird mit einer Flotte bestehend aus 50g/l einer 8%igen Natriumalginatlösung, 100 g/l einer 8-12%igen Kernmehretherlösung und 5g/l Mononatriumphosphat in Wasser foulardiert und dann getrocknet. Die Flottenaufnahme beträgt 70%.
Auf das so vorbehandelte Textil wird eine nach oben beschriebener Vorgehensweise hergestellte wässrige Tinte, enthaltend
5% des Farbstoffes (2)
2% Dispergiermittel Ultrazine NA (Ligninsulfonat, Borregaard)
15% Polyethylenglykol 400
0,01 % Biozid Mergal K9N
77,99% Wasser
mit einem Drop-on-Demand (Piezo) Inkjet Druckkopf aufgedruckt. Der Druck wird vollständig getrocknet. Die Fixierung erfolgt mittels überhitztem Dampf bei 175 °C während 7 Minuten. Anschließend wird der Druck einer alkalisch reduktiven Nachbehandlung unterzogen, warm gespült und dann getrocknet. Man erhält einen hochbrillanten, gelborangen Druck mit hervorragenden Gebrauchs- und Heißlichtechtheiten.

### Beispiel 6

Ein textiles Flächengebilde, bestehend aus Polyester wird mit einer Flotte bestehend aus 50g/l einer 8%igen Natriumalginatlösung, 100 g/l einer 8-12%igen Kernmehretherlösung und 5g/l Mononatriumphosphat in Wasser foulardiert und dann getrocknet. Die Flottenaufnahme beträgt 70%.
Auf das so vorbehandelte Textil wird eine nach oben beschriebener Vorgehensweise hergestellte wässrige Tinte, enthaltend
4% des Farbstoffes (2)
1 % Dispergiermittel Ultrazine NA (Ligninsulfonat, Borregaard)
1 % Dispergiermittel Tego Dispers 650
0,01 % Biozid Mergal K9N
83,99% Wasser
mit einem Drop-on-Demand (Flatjet) Inkjet Druckkopf aufgedruckt. Der Druck wird vollständig getrocknet. Die Fixierung erfolgt mittels überhitzten Dampfs bei 175 °C während 7 Minuten. Anschließend wird der Druck einer alkalisch reduktiven Nachbehandlung unterzogen, warm gespült und dann getrocknet. Man erhält einen hochbrillanten, gelborangen Druck mit hervorragenden Gebrauchs- und Heißlichtechtheiten.

### Beispiel 7

Ein textiles Flächengebilde, bestehend aus Polyester wird mit einer Flotte bestehend aus 50g/l einer 8%igen Natriumalginatlösung, 100 g/l einer 8-12%igen Kernmehretherlösung und 5g/l Mononatriumphosphat in Wasser foulardiert und dann getrocknet. Die Flottenaufnahme beträgt 70%.
Auf das so vorbehandelte Textil wird eine nach oben beschriebener Vorgehensweise hergestellte wässrige Tinte, enthaltend
3% des Farbstoffes (3) 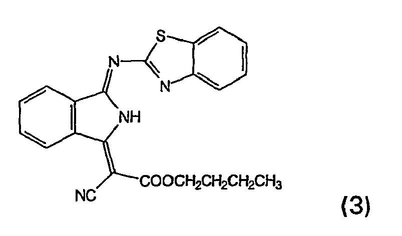 3% Dispergiermittel Disperbyk 190
10% Polyethylenglykol 400
20% Propylenglykol
0,01 % Biozid Mergal K9N
63,99% Wasser
mit einem Drop-on-Demand (Piezo) Inkjet Druckkopf aufgedruckt. Der Druck wird vollständig getrocknet. Die Fixierung erfolgt mittels überhitzten Dampfs bei 175 °C während 7 Minuten. Anschließend wird der Druck einer alkalisch reduktiven Nachbehandlung unterzogen, warm gespült und dann getrocknet. Man erhält einen hochbrillanten, gelborangen Druck mit hervorragenden Gebrauchs- und Heißlichtechtheiten.

### Beispiel 8

Ein textiles Flächengebilde, bestehend aus Polyester wird mit einer Flotte bestehend aus 50g/l einer 8%igen Natriumalginatlösung, 100 g/l einer 8-12%igen Kernmehretherlösung und 5g/l Mononatriumphosphat in Wasser foulardiert und dann getrocknet. Die Flottenaufnahme beträgt 70%.
Auf das so vorbehandelte Textil wird eine nach oben beschriebener Vorgehensweise hergestellte wässrige Tinte, enthaltend
9% des Farbstoffes (3)
3% Dispergiermittel Tego Dispers 740 W
5% Polyethylenglykol 200
10% Ethylenglykol
0,01 % Biozid Mergal K9N
72,99% Wasser
mit einem Drop-on-Demand (Piezo) Inkjet Druckkopf aufgedruckt. Der Druck wird vollständig getrocknet. Die Fixierung erfolgt mittels überhitzten Dampfs bei 175 °C während 7 Minuten. Anschließend wird der Druck einer alkalisch reduktiven Nachbehandlung unterzogen, warm gespült und dann getrocknet.
Man erhält einen hochbrillanten, gelborangen Druck mit hervorragenden Gebrauchs- und Heißlichtechtheiten.

### Beispiel 9

Ein textiles Flächengebilde, bestehend aus Polyester wird mit einer Flotte bestehend aus 50g/l einer 8%igen Natriumalginatlösung, 100 g/l einer 8-12%igen Kernmehretherlösung und 5g/l Mononatriumphosphat in Wasser foulardiert und dann getrocknet. Die Flottenaufnahme beträgt 70%.
Auf das so vorbehandelte Textil wird eine nach oben beschriebener Vorgehensweise hergestellte wässrige Tinte, enthaltenden
5% des Farbstoffes (4) 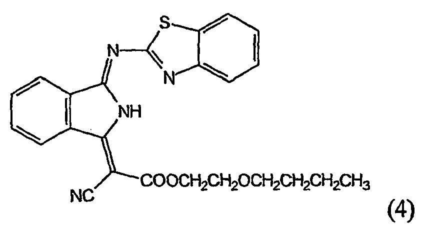 5% Dispergiermittel Tamol
10% 1,2-Hexandiol
20% N-Methylpyrrolidon
0,01 % Biozid Mergal K9N
59,99% Wasser
mit einem Drop-on-Demand (Bubble Jet) Inkjet Druckkopf aufgedruckt. Der Druck wird vollständig getrocknet. Die Fixierung erfolgt mittels überhitzten Dampfs bei 175 °C während 7 Minuten. Anschließend wird der Druck einer alkalisch reduktiven Nachbehandlung unterzogen, warm gespült und dann getrocknet.
Man erhält einen hochbrillanten, gelborangen Druck mit hervorragenden Gebrauchs- und Heißlichtechtheiten.

### Beispiel 10

Ein textiles Flächengebilde, bestehend aus Polyester wird mit einer Flotte bestehend aus 50g/l einer 8%igen Natriumalginatlösung, 100 g/l einer 8-12%igen Kernmehretherlösung und 5g/l Mononatriumphosphat in Wasser foulardiert und dann getrocknet. Die Flottenaufnahme beträgt 70%.
Auf das so vorbehandelte Textil wird eine nach oben beschriebener Vorgehensweise hergestellte wässrige Tinte, enthaltend
2% des Farbstoffes (3)
2% des Farbstoffes (4)
2% Dispergiermittel Ultrazine NA (Ligninsulfonat, Borregaard)
10% Diethylenglykol
20% Sulfolan
2% Harnstoff
0,01 % Biozid Mergal K9N
61,99% Wasser
mit einem Drop-on-Demand (Bubble Jet) Inkjet Druckkopf aufgedruckt. Der Druck wird vollständig getrocknet. Die Fixierung erfolgt mittels überhitzten Dampfs bei 175 °C während 7 Minuten. Anschließend wird der Druck einer alkalisch reduktiven Nachbehandlung unterzogen, warm gespült und dann getrocknet.
Man erhält einen hochbrillanten, gelborangen Druck mit hervorragenden Gebrauchs- und Heißlichtechtheiten.

### Beispiel 11

Ein textiles Flächengebilde, bestehend aus Polyester wird mit einer Flotte bestehend aus 50g/l einer 8%igen Natriumalginatlösung, 100 g/l einer 8-12%igen Kernmehretherlösung und 5g/l Mononatriumphosphat in Wasser foulardiert und dann getrocknet. Die Flottenaufnahme beträgt 70%.
Auf das so so vorbehandelte Textil wird eine nach oben beschriebener Vorgehensweise hergestellte wässrige Tinte, enthaltend
1,5% des Farbstoffes (3)
2,5% des Farbstoffes (4)
2% Dispsergiermittel Tego Dispers 760 W
0.5 % Dispergiermittel Tego Dispers 650
20% Glycerin
5% Diethylenglykol
0.2% Surfynol 104. E (Air Products)
0,01 % Biozid Mergal K9N 68,29% Wasser
mit einem Drop-on-Demand (Piezo) Inkjet Druckkopf aufgedruckt. Der Druck wird vollständig getrocknet. Die Fixierung erfolgt mittels überhitzten Dampfs bei 175 °C während 7 Minuten. Anschließend wird der Druck einer alkalisch reduktiven Nachbehandlung unterzogen, warm gespült und dann getrocknet. Man erhält einen hochbrillanten, gelborangen Druck mit hervorragenden Gebrauchs- und Heißlichtechtheiten.

### Beispiel 12

Ein textiles Flächengebilde, bestehend aus Polyester wird mit einer Flotte bestehend aus 50g/l einer 8%igen Natriumalginatlösung, 100 g/l einer 8-12%igen Kernmehretherlösung und 5g/l Mononatriumphosphat in Wasser foulardiert und dann getrocknet. Die Flottenaufnahme beträgt 70%.
Auf das so vorbehandelte Textil wird eine nach oben beschriebener Vorgehensweise hergestellte wässrige Tinte, enthaltend
3% des Farbstoffes (5) 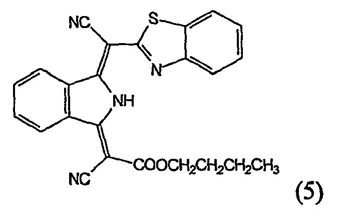 2% Dispergiermittel Ultrazine NA (Ligninsulfonat, Borregaard)
15 % Propylenglykol
5% Polyethylenglykol 800
0,01 % Biozid Mergal K9N
74,99% Wasser
mit einem Drop-on-Demand (Valvejet) Inkjet Druckkopf aufgedruckt. Der Druck wird vollständig getrocknet. Die Fixierung erfolgt mittels überhitzten Dampfs bei 175 °C während 7 Minuten. Anschließend wird der Druck einer alkalisch reduktiven Nachbehandlung unterzogen, warm gespült und dann getrocknet. Man erhält einen hochbrillanten, gelben, fluoreszierenden Druck mit hervorragenden Gebrauchs- und Heißlichtechtheiten.

### Beispiel 13

Ein textiles Flächengebilde, bestehend aus Polyester wird mit einer Flotte bestehend aus 50g/l einer 8%igen Natriumalginatlösung, 100 g/l einer 8-12%igen Kernmehretherlösung und 5g/l Mononatriumphosphat in Wasser foulardiert und dann getrocknet. Die Flottenaufnahme beträgt 70%.
Auf das so vorbehandelte Textil wird eine nach oben beschriebener Vorgehensweise hergestellte wässrige Tinte, enthaltend
6% des Farbstoffes (6) 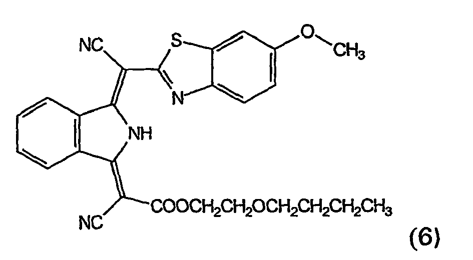 1.5% Dispergiermittel Disperbyk 190
10% 2-Propanol
20% Polyethylenglykol 200
0,01 % Biozid Mergal K9N
62,49% Wasser
mit einem Drop-on-Demand (Piezo) Inkjet Druckkopf aufgedruckt. Der Druck wird vollständig getrocknet. Die Fixierung erfolgt mittels überhitzten Dampfs bei 175 °C während 7 Minuten. Anschließend wird der Druck einer alkalisch reduktiven Nachbehandlung unterzogen, warm gespült und dann getrocknet.
Man erhält einen hochbrillanten, orangen -Druck mit hervorragenden Gebrauchs- und Heißlichtechtheiten.

## Patentansprüche

1. Wässrige Drucktinten für den Textildruck nach dem Ink-Jet-Verfahren, enthaltend einen oder mehrere Farbstoffe der allgemeinen Formel (I) 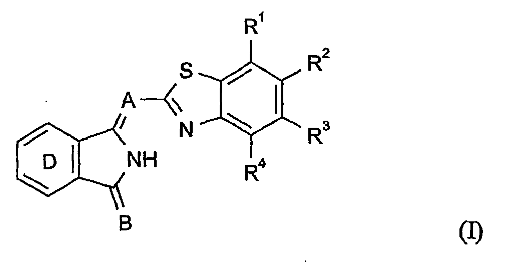 worin
A für N oder einen Cyanmethylenrest,
B für einen Rest der Formel C(CN)COOR⁵ oder N-R⁶ steht,
R¹ bis R⁴ unabhängig voneinander Wasserstoff, Halogen, gegebenenfalls substituiertes C₁-C₈-Alkyl oder C₅-C₈-Cycloalkyl, gegebenenfalls durch Sauerstoff unterbrochenes C₁-C₁₀-Alkoxy, gegebenenfalls substituiertes C₆-C₁₀-Aryloxy, CF₃, oder gegebenenfalls substituiertes Dialkylamin bedeuten oder jeweils zwei benachbarte R¹ bis R⁴-Reste zusammen mit den aromatischen Ring C-Atomen einen annelierten Benzol oder Naphthalinring bilden, der gegebenenfalls weiter substituiert ist,
R⁵ für einen gegebenenfalls substituierten und gegebenenfalls durch Sauerstoff unterbrochenen, gesättigten oder ungesättigten C₁-C₂₀. Alkylrest, C₆-C₁₀-Aryl-C₁-C₁₀-alkyl oder Hetarylalkyl steht,
R⁶ gegebenenfalls substituiertes und gegebenenfalls durch Sauerstoff unterbrochenes C₁-C₂₀-Alkyl, Cycloalkyl, Cycloalkyl-alkyl, oder Ar-alkyl bedeutet und
der Ring D unsubstituiert ist oder wenigstens einen Substituenten trägt, welcher gegebenenfalls, zusammen mit einem weiteren Substituenten in ortho-Stellung und den Ring-C-Atomen, einen annelierten Benzol oder Naphthalinring bildet,

2. Wässrige Drucktinten für den Textildruck nach dem Ink-Jet-Verfahren enthaltend Farbstoffe der Formel (I) gemäß Anspruch 1, worin
R¹ und R² unabhängig voneinander Wasserstoff, Cl, Br, Methyl, Ethyl, n-Propyl, Isopropyl, n-Butyl, iso-Butyl, tert.-Butyl, Cyclohexyl, gegebenenfalls durch 1 bis 2 Sauerstoffe unterbrochenes C₁-C₁₀-Alkoxy, gegebenenfalls substituiertes Phenoxy, CF₃ oder eine Di(C₁-C₄)-Alkylaminogruppe bedeuten,
R³ und R⁴ die Bedeutung von R¹ und R² haben oder zusammen mit den Ring-C-Atomen einen annelierten Benzolring bilden,
R⁵ einen gegebenenfalls durch Cl, CN oder gegebenenfalls substituiertes Phenoxy, substituiertes und gegebenenfalls durch 1 bis 2 Sauerstoffatome unterbrochenes C₁-C₁₂-Alkyl, C₆-C₁₀-Aryl-C₁-C₁₀-Alkyl oder Hetarylalkyl,
R⁶ für einen gegebenenfalls durch gegebenenfalls substituiertes Phenoxy, substituiertes gesättigtes oder ungesättigtes C₁-C₁₂-Alkyl, das gegebenenfalls durch 1 bis 2 Sauerstoffe unterbrochen ist, steht und
Ring D unsubstituiert oder durch CN, Halogenatome, insbesondere 1 bis 4 Cl-Atomen, 1 bis 2 C₁-C₁₀-Alkylreste und/oder 1 bis 2 C₁-C₁₀-Alkoxyreste- oder einen Phenylrest substituiert ist, die gegebenenfalls jeweils durch 1 bis 2 Sauerstoffatome unterbrochen sind.

3. Wässrige Drucktinten für den Textildruck nach dem Ink-Jet-Verfahren enthaltend Farbstoffe gemäß Anspruch 1 der allgemeinen Formel (II) 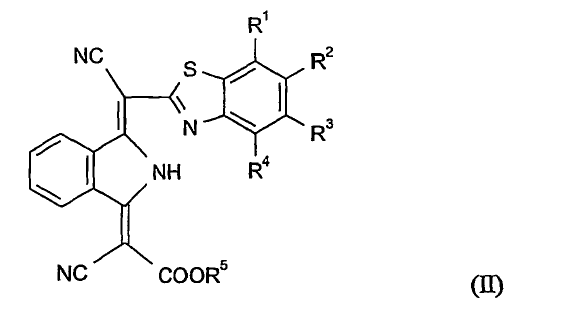 worin R¹ bis R⁵ die Bedeutungen gemäß Anspruch 1 haben.

4. Wässrige Drucktinten für den Textildruck nach dem Ink-Jet-Verfahren enthaltend Farbstoffe gemäß Anspruch 1 der allgemeinen Formel (III) 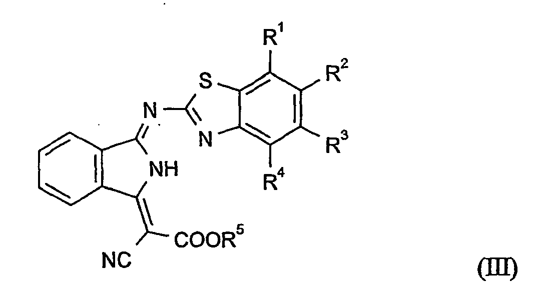 worin R¹ bis R⁵ die Bedeutungen gemäß Anspruch 1 besitzen.

5. Wässrige Drucktinten für den Textildruck nach dem lnk-Jet-Verfahren enthaltend Farbstoffe gemäß Anspruch 1 der allgemeinen Formel (IV) 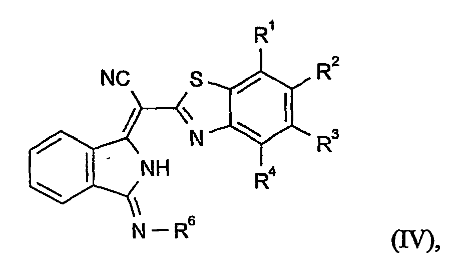 worin R¹ bis R⁴ und R⁶ die in Anspruch 1 angegebenen Bedeutungen haben.

6. Wässrige Drucktinten für den Textildruck nach dem Ink-Jet-Verfahren enthaltend Farbstoffe gemäß Anspruch 1 der allgemeinen Formel (V) 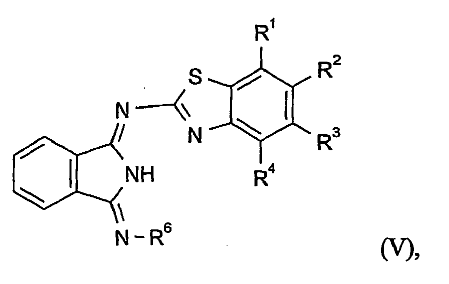 worin R¹ bis R⁴ und R⁶ die in Anspruch 1 angegebenen Bedeutungen haben.

7. Wässrige Drucktinten für den Textildruck nach dem Ink Jet Verfahren gemäß mindestens einem der Ansprüche 1 bis 6 enthaltend einen oder mehrere Dispersionsfarbstoffe der allgemeinen Formel (1) in Mengen von 0,01 Gew. % bis 40 Gew.% bezogen auf das Gesamtgewicht der Tinten.

8. Wässrige Drucktinten für den Textildruck nach dem Ink-Jet-Verfahren gemäß mindestens einem der Ansprüche 1-7, enthaltend 0,1-20 Gew. % eines Dispergiermittels sowie 1 % bis 60% organische Lösungsmittel bezogen auf das Gesamtgewicht der Tinte.

9. Verfahren zum Bedrucken von textilen Fasermaterialien nach dem Ink-Jet-Verfahren, **dadurch gekennzeichnet, dass** eine Drucktinte gemäß mindestens einem der Ansprüche 1 bis 8 zum Einsatz kommt.

## Claims

1. An aqueous printing ink for textile printing by the inkjet process, comprising one or more dyes of the formula (I) 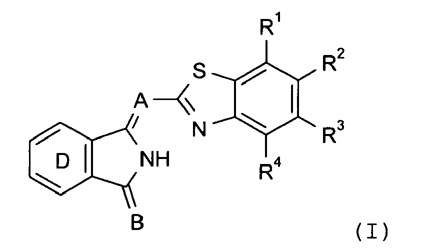 in which
A is N or a cyanomethylene radical,
B is a radical of the formula C(CN)COOR⁵ or N-R⁶,
R¹ to R⁴ independently of one another are hydrogen, halogen, unsubstituted or substituted C₁-C₈ alkyl or C₅-C₆ cycloalkyl, uninterrupted or oxygen-interrupted C₁-C₁₀ alkoxy, unsubstituted or substituted C₆-C₁₀ aryloxy, CF₃, or unsubstituted or substituted dialkylamine, or pairs of adjacent R¹ to R⁴ radicals together with the aromatic ring carbon atoms form a fused benzene or naphthalene ring, which where appropriate is substituted further,
R⁵ is an unsubstituted or substituted and uninterrupted or oxygen-interrupted, saturated or unsaturated C₁-C₂₀ alkyl radical,
C₆-C₁₀ aryl C₁-C₁₀ alkyl or hetarylalkyl,
R⁶ is unsubstituted or substituted and uninterrupted or oxygen-interrupted C₁-C₂₀ alkyl, cycloalkyl, cycloalkylalkyl or aralkyl, and
the ring D is unsubstituted or carries at least one substituent which where appropriate, together with a further substituent in ortho position and the ring carbon atoms, forms a fused benzene or naphthalene ring.

2. An aqueous printing ink for textile printing by the inkjet process, comprising dyes of the formula (I) as set forth in claim 1, in which
R¹ and R² independently of one another are hydrogen, Cl, Br, methyl, ethyl, n-propyl, isopropyl, n-butyl, isobutyl, tert-butyl, cyclohexyl, uninterrupted C₁-C₁₀ alkoxy or C₁-C₁₀ alkoxy interrupted by 1 to 2 oxygens; unsubstituted or substituted phenoxy, CF₃ or a di (C₁-C₄) -alkylamino group,
R³ and R⁴ have the definition of R¹ and R² or together with the ring carbon atoms form a fused benzene ring,
R⁵ is a C₁-C₁₂ alkyl which is unsubstituted or substituted by Cl, by CN or by unsubstituted or substituted phenoxy and is uninterrupted or interrupted by 1 to 2 oxygen atoms, or is C₆-C₁₀ aryl-C₁-C₁₀ alkyl or hetarylalkyl,
R⁶ is a saturated or unsaturated C₁-C₁₂ alkyl which is unsubstituted or substituted by unsubstituted or substituted phenoxy and is uninterrupted or interrupted by 1 to 2 oxygens, and
ring D is unsubstituted or substituted by CN, halogen atoms, in particular 1 to 4 Cl atoms, 1 to 2 C₁-C₁₀ alkyl radicals and/or 1 to 2 C₁-C₁₀ alkoxy radicals, or a phenyl radical, which are each uninterrupted or interrupted by 1 to 2 oxygen atoms.

3. An aqueous printing ink for textile printing by the inkjet process, comprising dyes as set forth in claim 1 of the formula (II) 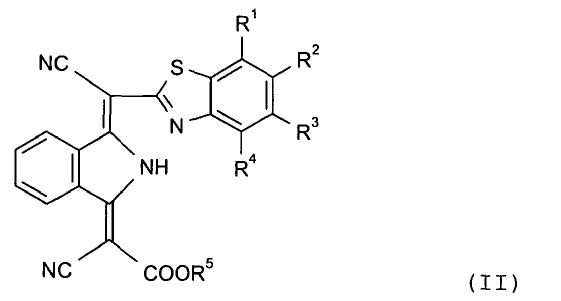 in which R¹ to R⁵ are as defined in claim 1.

4. An aqueous printing ink for textile printing by the inkjet process, comprising dyes as set forth in claim 1 of the formula (III) 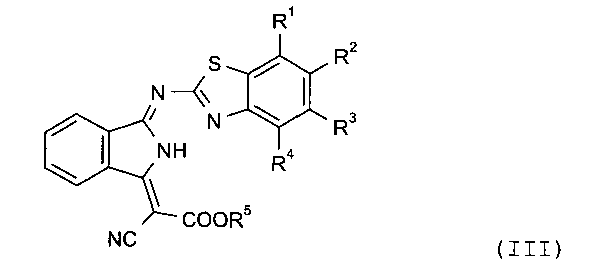 in which R¹ to R⁵ are as defined in claim 1.

5. An aqueous printing ink for textile printing by the inkjet process, comprising dyes as set forth in claim 1 of the formula (IV) 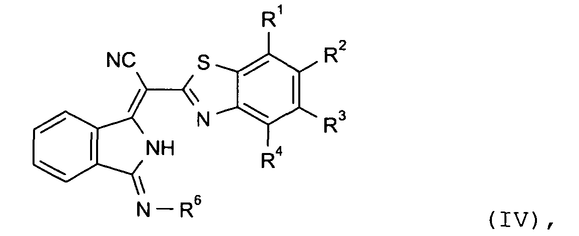 in which R¹ to R⁴ and R⁶ are as defined in claim 1.

6. An aqueous printing ink for textile printing by the inkjet process, comprising dyes as set forth in claim 1 of the formula (V) 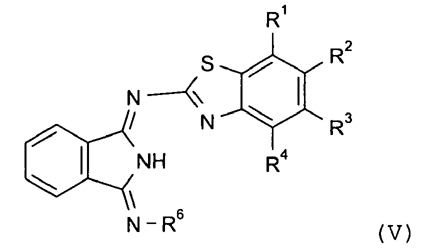 in which R¹ to R⁴ and R⁶ are as defined in claim 1.

7. An aqueous printing ink for textile printing by the inkjet process as claimed in at least one of claims 1 to 6, comprising one or more disperse dyes of the formula (I) in amounts of 0.01% by weight to 40% by weight, based on the total weight of the ink.

8. An aqueous printing ink for textile printing by the inkjet process as claimed in at least one of claims 1-7, containing 0.1%-20% by weight of a dispersant and also 1% to 60% of organic solvents, based on the total weight of the ink.

9. A method of printing textile fiber materials by the inkjet process, **characterized in that** a printing ink as claimed in at least one of claims 1 to 8 is employed.

## Revendications

1. Encres d'imprimerie aqueuses pour l'impression sur textile selon le procédé à jet d'encre, contenant un ou plusieurs colorants de formule générale (I) 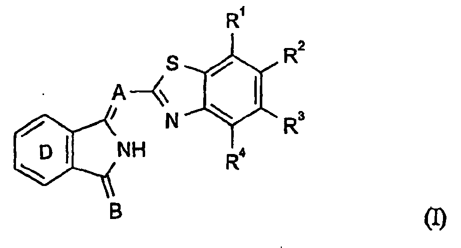 où
A représente N ou radical cyanométhylène,
B représente un radical de formule C(CN)COOR⁵ ou N-R⁶,
R¹ à R⁴ signifient, indépendamment l'un de l'autre, hydrogène, halogène, C₁-C₈-alkyle ou C₅-C₈-cycloalkyle le cas échéant substitués, C₁-C₁₀-alcoxy le cas échéant interrompu par oxygène, C₆-C₁₀-aryloxy le cas échéant substitué, CF₃, ou dialkylamine le cas échéant substitué ou à chaque fois deux radicaux R¹ à R⁴ adjacents forment avec les atomes de C du cycle aromatique un benzène annelé ou un cycle naphtalène, qui est le cas échéant substitué davantage,
R⁵ représente un radical C₁-C₂₀-alkyle, C₆-C₁₀-aryl-C₁-C₁₀-alkyle ou hétéroarylalkyle le cas échéant substitués et le cas échéant interrompus par oxygène, saturés ou insaturés,
R⁶ signifie un radical C₁-C₂₀-alkyle, cycloalkyle, cycloalkylalkyle, ou aralkyle le cas échéant substitués et le cas échéant interrompus par oxygène et
le cycle D est non substitué ou porte au moins un substituant, qui forme le cas échéant, avec un autre substituant en position ortho et les atomes de carbone du cycle, un benzène annelé ou un cycle naphtalène.

2. Encres d'imprimerie aqueuses pour l'impression sur textile selon le procédé par jet d'encre contenant des colorants de formule (I) selon la revendication 1, où
R¹ et R² signifient, indépendamment l'un de l'autre, hydrogène, Cl, Br, méthyle, éthyle, n-propyle, isopropyle, n-butyle, iso-butyle, tert-butyle, cyclohexyle, C₁-C₁₀-alcoxy le cas échéant interrompu par 1 à 2 oxygènes, phénoxy le cas échéant substitué, CF₃ ou un groupe di(C₁-C₄)-alkylamino,
R³ et R⁴ signifient R¹ et R² ou forment ensemble avec les atomes de carbone du cycle un cycle benzène annelé,
R⁵ représente un radical C₁-C₁₂-alkyle, C₆-C₁₀-aryl-C₁-C₁₀-alkyle ou hétéroarylalkyle le cas échéant substitués par Cl, CN ou phénoxy le cas échéant substitué et le cas échéant interrompus par 1 à 2 atomes d'oxygène,
R⁶ représente un radical C₁-C₁₂-alkyle saturé ou insaturé, le cas échéant substitué par phénoxy, qui est le cas échéant substitué, le cas échéant interrompu par 1 à 2 oxygènes et
le cycle D est non substitué ou substitué par CN, des atomes d'halogène, en particulier 1 à 4 atomes de Cl, 1 à 2 radicaux C₁-C₁₀-alkyle et/ou 1 à 2 radicaux C₁-C₁₀-alcoxy ou un radical phényle, qui sont le cas échéant interrompus par à chaque fois 1 à 2 atomes d'oxygène.

3. Encres d'imprimerie aqueuses pour l'impression sur textile selon le procédé par jet d'encre contenant des colorants selon la revendication 1 de formule générale (II) 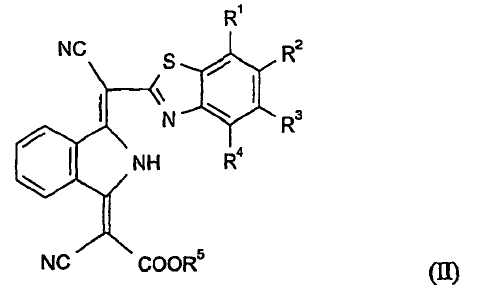 dans laquelle R¹ à R⁵ présentent les significations selon la revendication 1.

4. Encres d'imprimerie aqueuses pour l'impression sur textile selon le procédé par jet d'encre contenant des colorants selon la revendication 1 de formule générale (III) 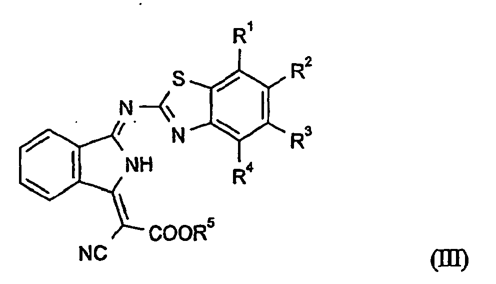 dans laquelle R¹ à R⁵ présentent les significations selon la revendication 1.

5. Encres d'imprimerie aqueuses pour l'impression sur textile selon le procédé par jet d'encre contenant des colorants selon la revendication 1 de formule générale (IV) 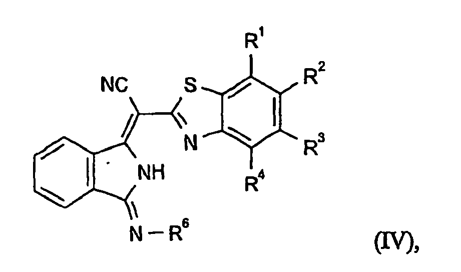 dans laquelle R¹ à R⁴ et R⁶ ont les significations indiquées dans la revendication 1.

6. Encres d'imprimerie aqueuses pour l'impression sur textile selon le procédé par jet d'encre contenant des colorants selon la revendication 1 de formule générale (V) 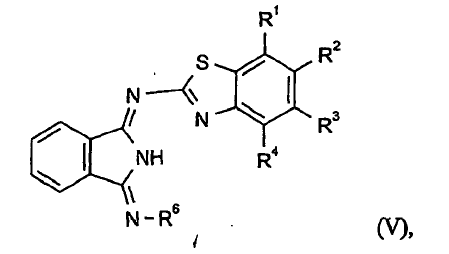 dans laquelle R¹ à R⁴ et R⁶ ont les significations indiquées dans la revendication 1.

7. Encres d'imprimerie aqueuses pour l'impression sur textile selon le procédé par jet d'encre, selon au moins l'une quelconque des revendications 1 à 6, contenant un ou plusieurs colorants de dispersion de formule générale (I) en des quantités de 0,01% en poids à 40% en poids par rapport au poids total des encres.

8. Encres d'imprimerie aqueuses pour l'impression sur textile selon le procédé par jet d'encre, selon au moins l'une quelconque des revendications 1-7 contenant 0,1-20% en poids d'un dispersant ainsi que 1% à 60% de solvants organiques par rapport au poids total de l'encre.

9. Procédé pour l'impression de matériaux fibreux textiles selon le procédé par jet d'encre, **caractérisé en ce qu'**on utilise une encre d'impression selon au moins l'une quelconque des revendications 1 à 8.
